# EUROPÄISCHE PATENTANMELDUNG

(11) **EP 4 340 145 A1**
(43) Veröffentlichungstag der Anmeldung: **20.03.2024**
(21) Anmeldenummer: 22195991.9
(22) Anmeldetag: 15.09.2022
(51) Int. Cl.: H02G 3/04, E04F 19/04, H02G 3/10

(54) **KABELKANALVERBUND**

(71) Anmelder: GGK GmbH & Co. KG, 35753 Greifenstein (DE)
(72) Erfinder: Müller, Eckhard, 35781 Weilburg an der Lahn (DE)
(74) Vertreter: advotec.

(57) **Zusammenfassung**

Die Erfindung betrifft einen Kabelkanalverbund (10) mit zumindest zwei Kabelkanälen (11, 12, 13) mit jeweils einem Kanalkorpus (14, 19), wobei die Kanalkorpusse (14, 19) unabhängig voneinander ausgebildet und über eine Verbindungseinrichtung miteinander verbunden sind, wobei die Verbindungseinrichtung einstückig an einer zumindest eine Kanalöffnung eines Kanalkorpusses (14, 19) abdeckenden Deckelwandung ausgebildet ist.

## Beschreibung

Die vorliegende Erfindung betrifft einen Kabelkanalverbund mit zumindest zwei Kabelkanälen mit jeweils einem Kanalkorpus, wobei die Kanalkorpusse unabhängig voneinander ausgebildet und über eine Verbindungseinrichtung miteinander verbunden sind.

Kabelkanalverbunde der eingangs genannten Art ermöglichen die eingehauste, separierte Verlegung von Kabeln mit unterschiedlichen Funktionen, so wie etwa Stromkabel und Datenkabel. Somit stellen derartige Kabelkanalverbunde eine Alternative zu Kabelkanälen dar, die eine Separierung der unterschiedlichen Kabel voneinander durch Ausbildung von zwei oder mehr Kanalkammern innerhalb eines Kabelkanals ermöglichen. Insbesondere dann, wenn Stromkabel und Datenkabel in unterschiedlicher Anzahl und/oder mit stark voneinander abweichenden Kabelquerschnitten innerhalb eines Mehrkammerkabelkanals verlegt werden sollen, kann dies eine entsprechend unterschiedliche Dimensionierung der Kanalkammern erforderlich machen, sodass eine größere Anzahl von Kabelkanälen mit variierender Kammeraufteilung bereitgehalten werden muss, um einen Kabelkanal bereitstellen zu können, der die für den jeweiligen Einsatzfall passende Kammeraufteilung aufweist.

Eine entsprechend aufwendige Bevorratung unterschiedlich dimensionierter Mehrkammerkabelkanäle kann dadurch verhindert werden, dass in ihrem Querschnitt standardisierte Kabelkanäle verwendet werden, die in erforderlicher Anzahl miteinander zu einem Kabelkanalverbund kombiniert werden, um eine insgesamt ausreichende Aufnahmekapazität für die zu verlegenden Kabel zur Verfügung zu stellen.

Eine weitere Möglichkeit zur Kombination einer Mehrzahl von Kabelkanälen zur Herstellung eines Kabelkanalverbunds besteht darin, die Mehrzahl von Kabelkanälen vermittels einer äußeren Klammer zu bündeln und diese Klammer auch zur Verbindung des Kabelkanalverbunds mit einer Oberfläche, also beispielsweise einer Wandoberfläche, zu verwenden. Zur Herstellung eines Kabelkanalverbund aus einer Mehrzahl von Kabelkanälen ist es auch möglich, die Kabelkanäle kraftschlüssig miteinander zu verbinden, also etwa die Kanalwandungen benachbarter Kabelkanäle miteinander zu verschrauben.

Beide der vorgenannten, bislang praktizierten Arten der Ausbildung von Kabelkanalverbunden haben sich bei der Montage als umständlich erwiesen, da zur Ausbildung der Kabelkanalverbunde in jedem Fall von den Kabelkanälen unabhängig ausgebildete Verbindungseinrichtungen, also etwa die Halteklammern oder die Verbindungsschrauben, verwendet werden müssen, wobei die Verwendung von Verbindungsschrauben, die die Kanalwandung durchdringen, darüber hinaus den für die Aufnahme der Kabel vorgesehenen Innenraum der Kabelkanäle beeinträchtigen und eine Verlegung der Kabel innerhalb der Kabelkanäle behindern können.

Der vorliegenden Erfindung liegt daher die Aufgabe zugrunde, einen Kabelkanalverbund zu ermöglichen, der einfach und insbesondere ohne zusätzliche Verbindungseinrichtungen herstellbar ist.

Der erfindungsgemäße Kabelkanalverbund weist die Merkmale des Anspruchs 1 auf.

Erfindungsgemäß ist die Verbindungseinrichtung einstückig an einer zumindest eine Kanalöffnung eines Kanalkorpusses abdeckenden Deckelwandung ausgebildet.

Die Verbindungseinrichtung ist somit Bestandteil des Kabelkanals, sodass der erfindungsgemäße Kabelkanalverbund ohne die Verwendung einer von den Kabelkanälen unabhängig ausgebildeten Verbindungseinrichtung herstellbar ist.

Wenn die Verbindungseinrichtung eine externe, eine Kanalwandung der Kanalkorpusse nicht durchdringende Formschlussverbindung ausbildet, ist sichergestellt, dass auch der für die Aufnahme der Kabel zur Verfügung stehende Aufnahmeraum durch die Verbindungseinrichtung nicht beeinträchtigt wird.

Besonders vorteilhaft ist es, wenn die Verbindungseinrichtung als eine Eingriffseinrichtung mit Rastvorsprüngen ausgebildet ist, die in außen an der Kanalwandung der Kanalkorpusse ausgebildete Rastausnehmungen eingreifen, sodass eine visuelle Überprüfung einer zwischen den Kabelkanälen bestehenden mechanischen Verbindung leicht möglich ist.

Vorzugsweise sind die Rastausnehmungen als zumindest abschnittsweise in Seitenwänden der Kanalwandung ausgebildete Nuten ausgebildet, sodass die Herstellung einer miteinander fluchtenden spaltfreien Verbindung zwischen den Kabelkanälen möglich wird.

Wenn die Deckelwandung von einem Kanalöffnungen mehrerer sich parallel nebeneinander erstreckender Kanalkorpusse überdeckender Kanaldeckel ausgebildet ist, derart, dass durch den formschlüssigen Eingriff der Einrichtung die Kanalkorpusse kraftschlüssig gegeneinander gehalten werden, kann die Deckelwandung nicht nur die Kanalöffnungen mehrerer Kanalkorpusse überdecken, sondern gleichzeitig auch zur Verbindung der Kanalkorpusse untereinander dienen.

Alternativ kann die Deckelwandung durch eine Bodenwand einer Kanalwandung eines Kanalkorpusses gebildet sein, derart, dass die Bodenwand des Kanalkorpusses eine Kanalöffnung eines weiteren Kanalkorpusses überdeckt und durch den formschlüssigen Eingriff der Eingriffseinrichtung die Kanalkorpusse kraftschlüssig gegeneinandergehalten werden.

Insbesondere in dem Fall, wenn der Kanalverbund zur Kombination von mehr als zwei Kabelkanälen dient, kann der mit der als Deckelwandung ausgebildeten Bodenwand versehene Kanalkorpus zur kraftschlüssigen Verbindung einer Mehrzahl von sich parallel nebeneinander erstreckenden weiteren Kanalkorpussen verwendet werden.

Eine besonders raumsparende Ausbildung bei möglichst kleiner Installationsfläche für den Kabelkanalverbund wird möglich, wenn zur Ausbildung einer matrixförmigen Anordnung von Kabelkanälen mit einer Reihen- und Spaltenanordnung der Kabelkanäle der Kabelkanalverbund zumindest zwei Kanalkorpusse mit einer eine Deckelwandung ausbildenden Bodenwand und einen Kanaldeckel aufweist, der zur Ausbildung von die Kanalöffnungen der Kanalkorpusse überdeckenden Deckelwänden dient.

Eine derartige "mehrgeschossige" Matrixbauart ermöglicht auch eine nach Erstinstallation erfolgende Erweiterung des Kabelkanalverbunds durch Austausch eines Kanaldeckels gegen Kanalkorpusse, die mit einer als Deckelwandung ausgebildeten Bodenwand versehen sind.

Diese mehrgeschossige Anordnung von Kabelkanälen ermöglicht insbesondere eine definierte hierarchische beziehungsweise ordinale oder kardinale Trennung von Stromkreisen.

Wenn der Kabelkanalverbund zur Ausbildung von Kabelkanälen unterschiedlicher Breite Kanalkorpusse mit einer ersten Breite und zumindest einen Kanalkorpus mit einer weiteren Breite aufweist, wobei die Breiten im Verhältnis von 2:1 stehen, lassen sich Kabelkanäle beziehungsweise Kanalkorpusse unterschiedlicher Breite kombinieren. So kann etwa ein Kanalkorpus auf zwei Kanalkorpussen mit halber Breite angeordnet und mittels der Eingriffseinrichtung mit diesen formschlüssig verbunden, insbesondere verrastet werden.

Besonders vorteilhaft ist es, wenn der Kabelkanalverbund mit einem Geräteträger zur Aufnahme einer Steckerbuchse oder dergleichen versehen ist, derart, dass zur Verbindung des Kanalverbunds mit dem Geräteträger ein am Geräteträger angeordneter Geräterträgeradapter vorgesehen ist, der den Kanalverbund formschlüssig aufnimmt, sodass durch den Geräteträgeradapter im Bedarfsfall eine zusätzliche Verbindungseinrichtung zur Verbindung des Geräteträgers mit dem Kanalverbund realisierbar ist.

Nachfolgend werden bevorzugte Ausführungsformen des Kabelkanalverbunds anhand der Zeichnungen näher erläutert. Es zeigen:
- **Fig. 1a**:: einen Kabelkanalverbund in einer ersten Ausführungsform und in Kombination mit einem Geräteträger;
- **Fig. 1b**:: den in **Fig. 1a** dargestellten Kabelkanalverbund in Explosionsdarstellung;
- **Fig. 2:**: einen Kabelkanalverbund in Kombination mit einem Geräteträger in einer zweiten Ausführungsform;
- **Fig. 3a:**: einen Kabelkanalverbund in Kombination mit einem Geräteträger in einer dritten Ausführungsform;
- **Fig. 3b:**: den in **Fig. 3a** dargestellten Kabelkanalverbund in Explosionsdarstellung;
- **Fig. 4:**: eine Kabelkanalanordnung in einer 3x3-Matrixform;
- **Fig. 5:**: eine Kabelkanalanordnung in einer 4x4-Matrixform;
- **Fig. 6:**: einen Kabelkanalverbund in einer Variante der 3×3-Matrixform;
- **Fig. 7:**: einen Kabelkanalverbund in einer Variante der 4×4-Matrixform.

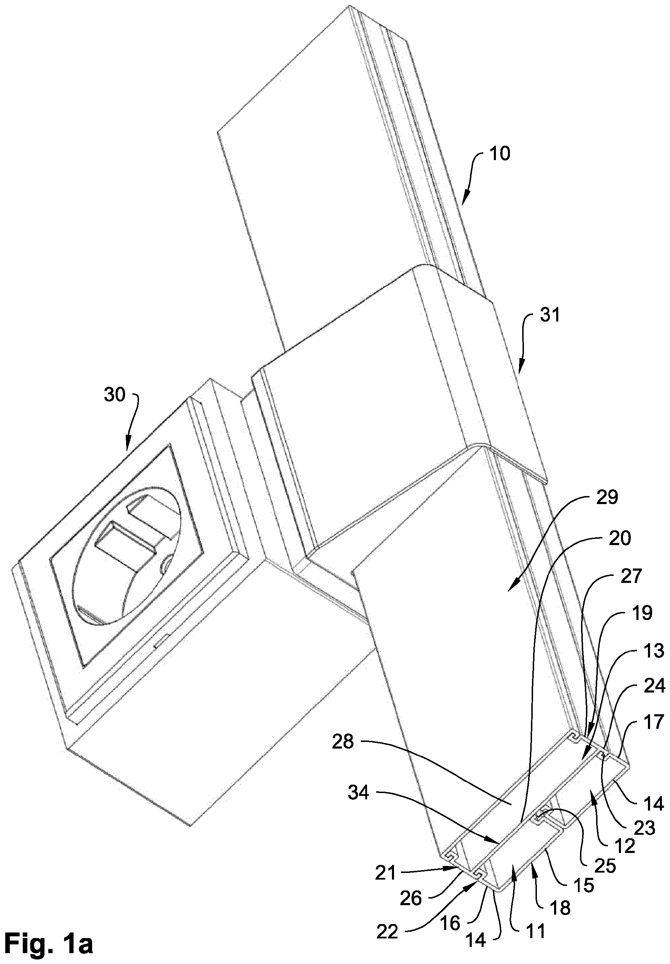

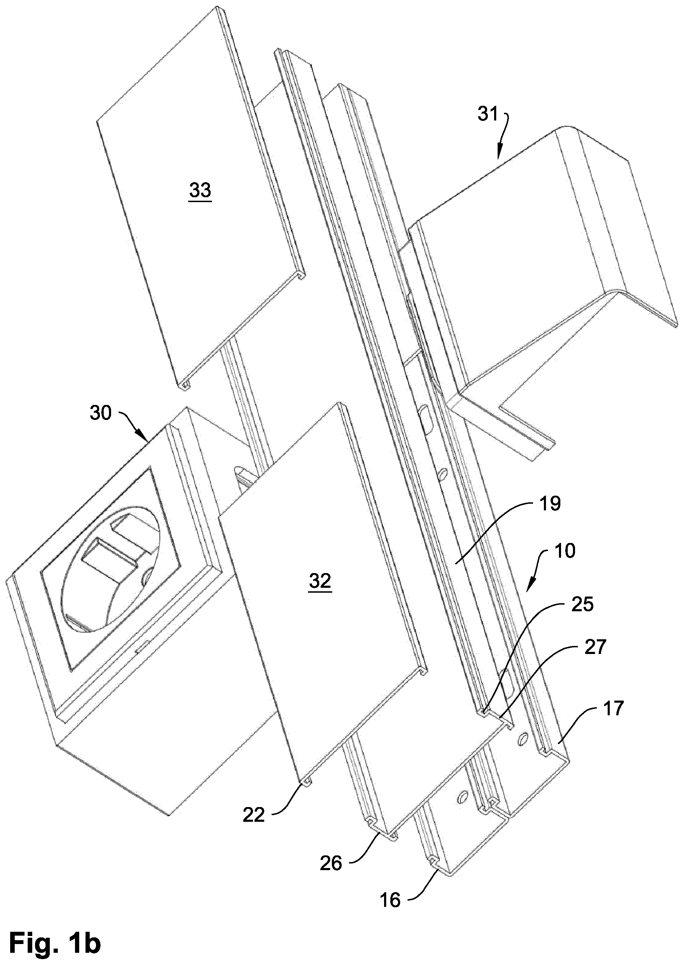

**Fig. 1a** zeigt einen Kabelkanalverbund 10 in einer Ausführungsform mit zwei in einer ersten Ebene nebeneinander angeordneten Kabelkanälen 11, 12, auf denen sich in einer darüber angeordneten weiteren Ebene ein Kabelkanal 13 erstreckt. Die Kabelkanäle 11, 12 weisen jeweils einen übereinstimmend ausgebildeten Kanalkorpus 14 auf, mit einer eine Bodenwand 15 und Seitenwände 16, 17 aufweisenden Kanalwandung 18. Zur Befestigung des Kabelkanalverbunds 10 auf einer Wandoberfläche können die Bodenwände 15 der Kanalkorpusse 14 mit der Wandoberfläche verbunden werden. Wie in **Fig.1** dargestellt, ist der Kabelkanalverbund 10 vermittels eines Geräteträgeradapters 31 mit einem Geräteträger 30 versehen, der hier eine Steckdose aufweist.

Wie **Fig. 1a** zeigt, weist ein Kanalkorpus 19 des sich auf den Kabelkanälen 11, 12 erstreckenden Kabelkanals 13 die doppelte Breite der Kanalkorpusse 14 auf, wobei eine Bodenwand 20 einer den Kanalkorpus 19 ausbildenden Kanalwandung 21 eine Deckelwandung 34 für die parallel nebeneinander angeordneten Kabelkanäle 11, 12 ausbildet, sodass die Kabelkanäle 11, 12 durch eine Kombination der Kanalkorpusse 14 mit der zur Ausbildung der Deckelwandung 34 dienenden Bodenwand 20 des Kanalkorpusses 19 gebildet werden.

Zur Ausbildung der Deckelwandung 34 ist an der Bodenwand 20 des Kanalkorpusses 19 eine Verbindungseinrichtung vorgesehen, die als Eingriffseinrichtung 22 ausgebildet ist, mit an Längsrändern der Bodenwand 20 verlaufenden, mit Rastvorsprüngen 23 versehenen Randstegen 24, wobei die Rastvorsprünge 23 außen in den Seitenwänden 16, 17 der Kanalkorpusse 14 ausgebildete Rastausnehmungen 25 eingreifen, die im vorliegenden Fall durch Nuten gebildet sind.

Zur Ausbildung des Kabelkanals 13 ist eine durch Seitenwände 26, 27 des Kanalkorpusses 19 begrenzte Kanalöffnung 28 mit einem im vorliegenden Fall zweiteilig ausgebildeten Kanaldeckel 29 versehen, wobei, wie insbesondere aus einer Zusammenschau der **Fig. 1a** und **1b** ersichtlich, zur Anordnung des den Kabelkanalverbund 10 mit dem Geräteträger 30 verbindenden Geräteträgeradapters 31 Deckelteile 32, 33 des Kanaldeckels 29 zu beiden Seiten des Geräteträgeradapters 31 auf dem Kanalkorpus 19 angeordnet sind. Die Deckelteile 32, 33 weisen zur Verbindung mit den Seitenwänden 26, 27 des Kanalkorpusses 19 eine überstimmend mit der Eingriffseinrichtung 22 an der Bodenwand 20 ausgebildete Eingriffseinrichtung 22 auf, mit der sie in übereinstimmend mit dem Rastausnehmungen 25 an den Seitenwänden 16, 17 der Kanalkorpusse 14 ausgebildete Rastausnehmungen 25 an den Seitenwänden 26, 27 eingreifen.

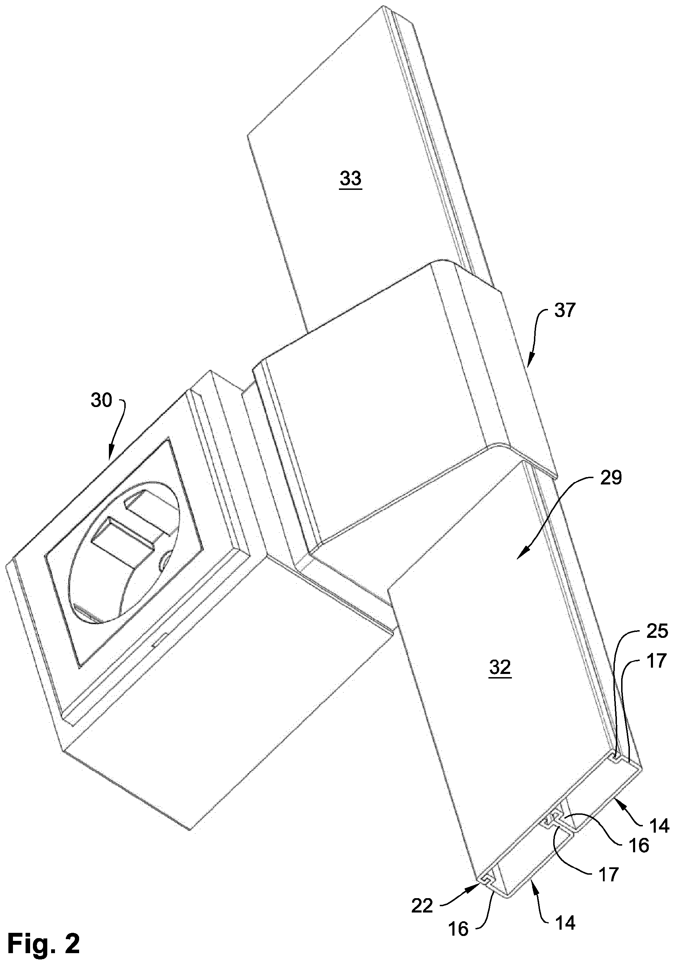

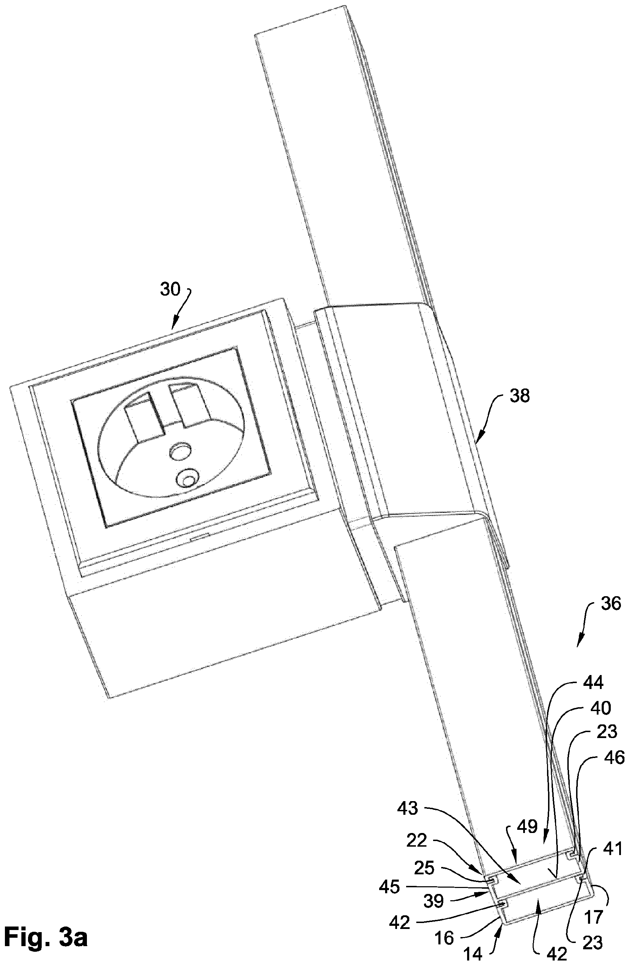

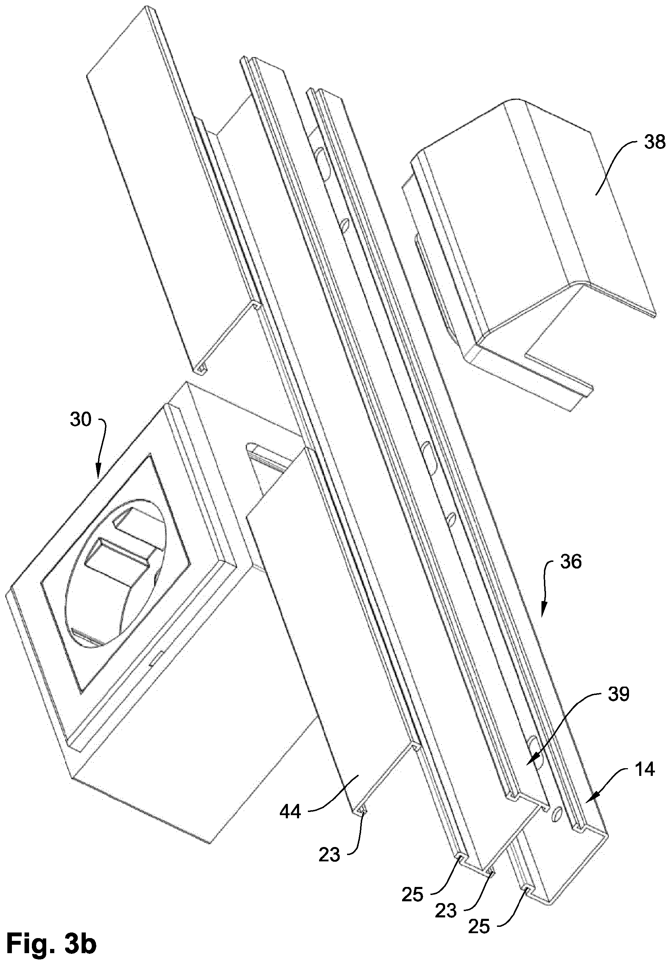

In den **Fig. 2****,** **3a** und **3b** sind beispielhaft weitere Kabelkanalverbunde 35 und 36 in Kombination mit dem in **Fig. 1** beispielhaft dargestellten Geräteträger 30 gezeigt, wobei zur formschlüssigen Aufnahme des jeweiligen Kanalverbunds 35, 36 entsprechend angepassten Geräteträgeradapter 37 bzw. 38 vorgesehen sind.

Bei dem in **Fig. 2** dargestellten Kabelkanalverbund 35 sind zwei bereits von dem in **Fig. 1** dargestellten Kabelkanalverbund 10 bekannte Kanalkorpusse 14 in einer gemeinsamen Ebene angeordnet, wobei jeweils von den Seitenwänden 16, 17 der Kanalkorpusse 14 begrenzte Kanalöffnungen mit einer Deckelwandung versehen sind, die im vorliegenden Fall durch den Kanaldeckel 29 bzw. die Deckelteile 32, 33 des Kanaldeckels 29 ausgebildet sind. Dabei werden als Folge des bereits im Zusammenhang mit des in **Fig. 1** dargestellten Ausführungsform erläuterten formschlüssigen Eingriffs der Eingriffseinrichtung 22 in die an den Seitenwänden 16, 17 der Kanalkorpusse 14 ausgebildeten Rastausnehmungen 25 die Kanalkorpusse 14 kraftschlüssig gegeneinandergehalten.

Der in den **Fig. 3a** und **3b** dargestellte Kabelkanalverbund 36 weist zur Ausbildung von zwei übereinanderliegenden Kabelkanälen 42, 43 einen Kanalkorpus 14 und einen Kanalkorpus 39 auf, wobei zur Abdeckung der zwischen den Seitenwänden 16, 17 des Kanalkorpusses 14 ausgebildeten Kanalöffnung eine Deckelwandung 49 durch eine Bodenwand 40 des Kanalkorpusses 39 gebildet ist, die hierzu an Längsrändern mit Randstegen 41 versehen ist, welche zum Eingriff in an den Seitenwänden 16, 17 des Kanalkorpusses 14 vorgesehene Rastausnehmungen 25 Rastvorsprünge 23 aufweisen.

Zur Ausbildung des oberhalb des Kabelkanals 42 verlaufenden Kabelkanals 43 ist eine im Kanalkorpus 39 ausgebildete Kanalöffnung mit einem in seiner Breite an dem Kanalkorpus 39 angepassten Kanaldeckel 44 versehen, der zur Verbindung mit dem Kanalkorpus 39 und Ausbildung einer Eingriffseinrichtung 22 an Längsrändern Rastvorsprünge 23 aufweist, die in außen an Seitenwänden 45, 46 des Kanalkorpusses 39 ausgebildete Rastausnehmungen 25 eingreifen.

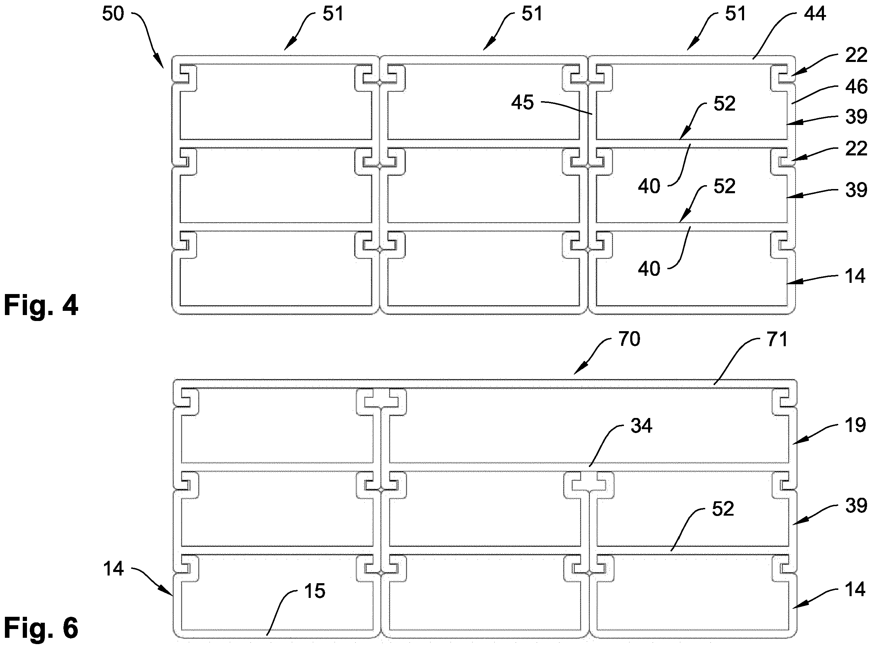

**Fig. 4** zeigt eine Kabelkanalordnung 50, die nebeneinander drei Kabelkanalverbunde 51 aufweist, welche jeweils basierend auf dem in den **Fig. 3a** und **3b** dargestellten Kabelkanalverbund 36 aufgebaut sind. Wie ein Vergleich der **Fig. 3a** und **4** zeigt, ist der Kabelkanalverbund 51 im Unterschied zu dem in **Fig. 3** dargestellten Kabelkanalverbund 36 zusätzlich zu den Kanalkorpussen 14 und 39 mit einem weiteren Kanalkorpus 39 versehen, sodass der Kabelkanalverbund 51 eine "Huckepack"- oder Stapelanordnung aufweist, bei der auf dem Kanalkorpus 14 zunächst ein Kanalkorpus 39 angeordnet ist, dessen Bodenwand 40 für den Kanalkorpus 14 eine Deckelwandung 52 ausbildet, und auf dem Kanalkorpus 39 befindet sich der weitere Kanalkorpus 39 dessen Bodenwand 40 eine weitere Deckelwandung 52 für den darunterliegend angeordneten Kanalkorpus 39 ausbildet. Der obere Kanalkorpus 39 ist schließlich zur Ausbildung einer Deckelwandung mit dem Kanaldeckel 44 versehen.

Zwischen dem Kanaldeckel 44 und den Seitenwänden 45, 46 des Kanalkorpusses 39 sowie zwischen den Bodenwänden 40 der Kanalkorpusse 39 und den Seitenwänden 45, 46 bzw. 16, 17 ist jeweils eine Eingriffseinrichtung 22 ausgebildet, sodass die Kanalkorpusse 14 und 39 der Kabelkanalverbunde 51 formschlüssig miteinander verbunden sind.

Zur Herstellung eines Kabelkanalverbunds, der die in **Fig. 4** nebeneinander angeordneten Kabelkanalverbunde 51 umfasst, kann analog den Darstellungen in den **Fig. 1** bis **3** ein entsprechend ausgebildeter Geräteträgeradapter vorgesehen werden, der die Kabelkanalanordnung formschlüssig aufnimmt.

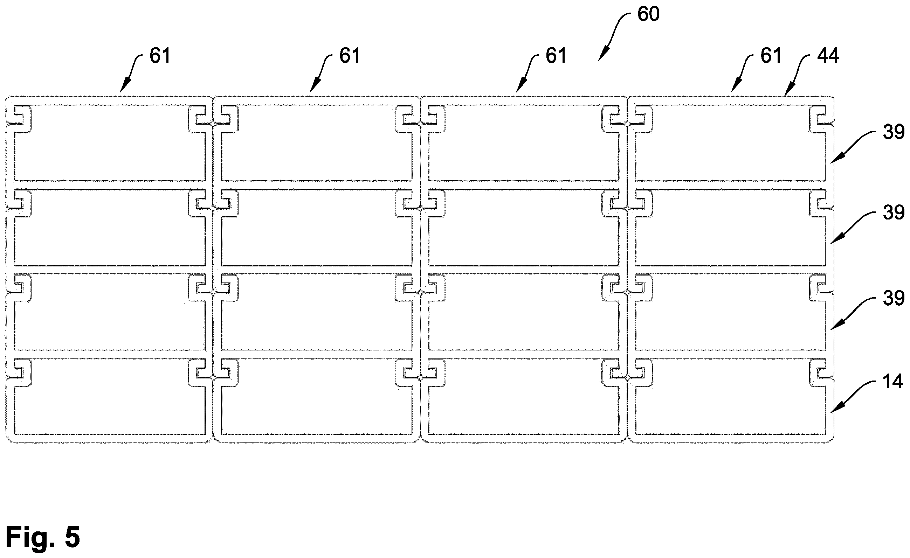

**Fig. 5** zeigt eine gegenüber der in **Fig. 4** dargestellten 3x3-Matrixform der Kabelkanalanordnung 50, die auf einer Kombination von drei Kabelkanalverbunden 51 basiert, erweiterte Kabelanordnung 60 in einer 4x4-Matrixform, bei der vier Kabelkanalverbunde 61 nebeneinander angeordnet sind, wobei sich die Kabelkanalverbunde 61 durch eine Erweiterung um einen Kanalkorpus 39 von den in **Fig. 4** dargestellten Kabelkanalverbunden 51 unterscheiden. Wie bereits bezugnehmend auf die **Fig. 4** erläutert, kann durch Kombination mit einem Geräteträger, der die Kabelkanalanordnung 60 formschlüssig aufnimmt, auch aus der Kabelkanalanordnung 60 ein Kabelkanalverbund ausgebildet werden, bei dem die Kanalkorpusse 14 und 39 kraftschlüssig gegeneinandergehalten werden.

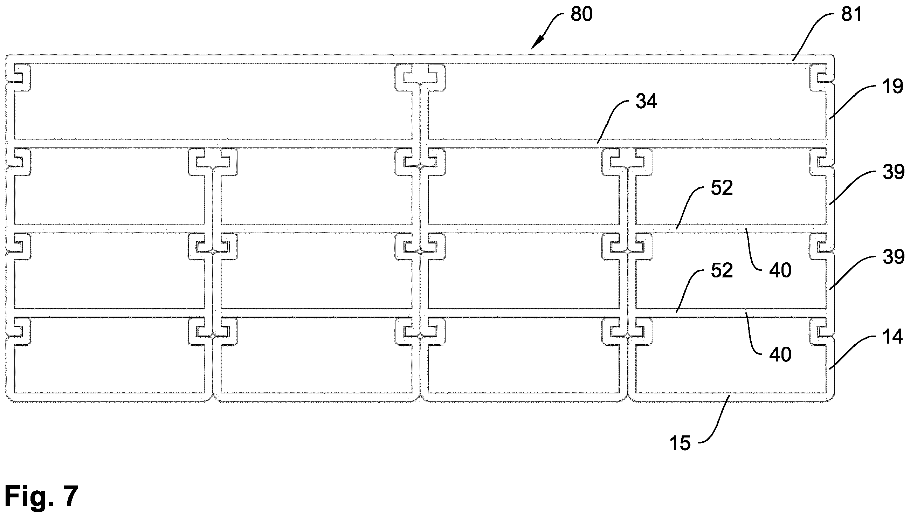

Die **Fig. 6** und 7 zeigen Kabelkanalverbunde 70 bzw. 80, die durch Kombination der Kanalkorpusse 14 mit Kanalkorpussen 39 und der Kanalkorpusse 39 mit Kanalkorpussen 19 hergestellt sind. Die Kanalkorpusse 19 sind in doppelter Breite wie die Kanalkorpusse 39 ausgeführt mit der, wie auch in **Fig. 1a** dargestellt, als Deckelwandung 34 ausgeführten Bodenwand 20, die die doppelte Breite der Bodenwand 40 der Kanalkorpusse 39 aufweist. Der Kabelkanalverbund 70 weist in der obersten Ebene einen Kanaldeckel 71 mit der dreifachen Breite einer Bodenwand 15 des Kanalkorpusses 14 auf. Der Kanaldeckel 71 bildet eine Deckelwandung aus, die die Kanalöffnungen der sich parallel nebeneinander erstreckenden Kanalkorpusse 39 und 19 abdeckt. Der Kanalverbund 80 weist in der obersten Ebene einen Kanaldeckel 81 mit der vierfachen Breite der Bodenwand 15 des Kanalkorpusses 14 auf. Der Kanaldeckel 81 bildet eine Deckelwandung aus, die die Kanalöffnungen der sich parallel nebeneinander erstreckenden Kanalkorpusse 19 abdeckt.

Wie anhand der in den **Fig. 4** bis 7 dargestellten Ausführungsbeispiele nachvollziehbar ist, ermöglicht die variantenreiche Matrixanordnung der unterschiedlich ausgebildeten Kanalkorpusse 14, 19 und 39 und Kanaldeckel 29, 71, 81 eine variable räumliche Anordnung von Kabelkanälen in einem Kabelkanalverbund.

## Patentansprüche

1. Kabelkanalverbund (10, 35, 51, 61, 70, 80) mit zumindest zwei Kabelkanälen (11, 12, 13, 42, 43) mit jeweils einem Kanalkorpus (14, 19, 39), wobei die Kanalkorpusse (14, 19, 39) unabhängig voneinander ausgebildet und über eine Verbindungseinrichtung miteinander verbunden sind,
**dadurch gekennzeichnet,**
**dass** die Verbindungseinrichtung einstückig an einer zumindest eine Kanalöffnung eines Kanalkorpusses (14, 19, 39) abdeckenden Deckelwandung (34, 49, 52) ausgebildet ist.

2. Kabelkanalverbund nach Anspruch 1,
**dadurch gekennzeichnet,**
**dass** die Verbindungseinrichtung eine externe, eine Kanalwand (21) der Kanalkorpusse (14, 19, 39) nicht durchdringende Formschlussverbindung der Kanalkorpusse (14, 19, 39) ausbildet.

3. Kabelkanalverbund nach Anspruch 1 oder 2,
**dadurch gekennzeichnet,**
**dass** die Verbindungseinrichtung als eine Eingriffseinrichtung (22) mit Rastvorsprüngen (23) ausgebildet ist, die in außen an der Kanalwandung der Kanalkorpusse (14, 19, 39) ausgebildete Rastausnehmungen (25) eingreifen.

4. Kabelkabelkanalverbund nach Anspruch 3,
**dadurch gekennzeichnet,**
**dass** die Eingriffseinrichtung (22) an Längsrändern der Deckelwandung (34, 49, 52) zumindest abschnittsweise ausgebildete, mit den Rastvorsprüngen (23) versehene Randstege (41) aufweist, die in die außen an der Kanalwandung (21) der Kanalkorpusse (14, 19, 39) ausgebildete Rastausnehmungen (25) eingreifen.

5. Kabelkabelkanalverbund nach Anspruch 4,
**dadurch gekennzeichnet,**
**dass** die Rastausnehmungen (25) als zumindest abschnittsweise in Seitenwänden (16, 17, 26, 27, 45, 46) der Kanalkorpusse (14, 19, 39) ausgebildete Nuten ausgebildet sind.

6. Kabelkanalverbund nach einem der vorangehenden Ansprüche,
**dadurch gekennzeichnet,**
**dass** die Deckelwandung von einem Kanalöffnungen mehrerer sich parallel nebeneinander erstreckender Kanalkorpusse (14, 19, 39) überdeckenden Kanaldeckel (29, 44, 71, 81) ausgebildet ist, derart, dass durch den formschlüssigen Eingriff der Eingriffseinrichtung (22) die Kanalkorpusse (14, 19, 39) kraftschlüssig gegeneinander gehalten sind.

7. Kabelkanalverbund nach einem der Ansprüche 1 bis 5,
**dadurch gekennzeichnet,**
**dass** die Deckelwandung durch eine Bodenwand (20, 40) eines Kanalkorpusses (14, 19, 39) ausgebildet ist, die eine Kanalöffnung zumindest eines weiteren Kanalkorpusses (14, 19, 39) überdeckt und durch den formschlüssigen Eingriff der Eingriffseinrichtung (22) die Kanalkorpusse (14, 19, 39) kraftschlüssig gegeneinander gehalten sind.

8. Kabelkanalverbund nach Anspruch 7,
**dadurch gekennzeichnet,**
**dass** der mit der als Deckelwandung (34, 49, 52) ausgebildeten Bodenwand (20, 40) versehene Kanalkorpus (14, 19, 39) zur kraftschlüssigen Verbindung eine Mehrzahl von sich parallel nebeneinander erstreckenden weiteren Kanalkorpussen (14, 19, 39) dient.

9. Kabelkanalverbund nach Anspruch 6 und 7 oder 6 und 8,
**dadurch gekennzeichnet,**
**dass** zur Ausbildung einer matrixförmigen Anordnung von Kabelkanälen (11, 12, 13) mit einer Reihen- und Spaltenanordnung der Kabelkanäle der Kabelkanalverbund (10, 35, 51, 70, 80) zumindest zwei Kanalkorpusse (14, 19, 39) mit einer eine Deckelwandung (34, 49, 52) ausbildenden Bodenwand (20, 40) und einen Kanaldeckel (29, 44, 71, 81) aufweist, der zur Ausbildung von die Kanalöffnungen der Kanalkorpusse überdeckenden Deckelwänden dient.

10. Kabelkanalverbund nach Anspruch 9,
**dadurch gekennzeichnet,**
**dass** der Kabelkanalverbund (10, 35, 51, 70, 80) zur Ausbildung von Kabelkanälen unterschiedlicher Breite Kanalkorpusse (14, 19, 39) mit einer ersten Breite und zumindest einen Kanalkorpus (14, 19, 39) mit einer weiteren Breite aufweist, wobei die Breiten im Verhältnis von 2:1 stehen.

11. Kabelkanalverbund nach einem oder mehreren der vorangehenden Ansprüche,
**dadurch gekennzeichnet,**
**dass** der Kabelkanalverbund (10, 35, 51, 70, 80) mit einem Geräteträger (30) zur Aufnahme einer Steckerbuchse oder dergleichen versehen ist, derart, dass zur Verbindung des Kabelkanalverbunds (10, 35, 51, 70, 80) mit dem Geräteträger (30) ein am Geräteträger (30) angeordneter Geräteträgeradapter (31) vorgesehen ist, der den Kabelkanalverbund (10, 35, 51, 70, 80) formschlüssig aufnimmt.
